# EUROPEAN PATENT SPECIFICATION

(11) **EP 2 435 699 B1**
(45) Date of publication and mention of the grant of the patent: **01.07.2015**
(21) Application number: 10722577.3
(22) Date of filing: 27.05.2010
(51) Int. Cl.: F03D 11/00

(54) **SHAFT CONNECTION USING A BAND**
WELLENVERBINDUNG MIT EINEM BAND
RACCORDEMENT D'ARBRE UTILISANT UNE BANDE

(30) Priority: 29.05.2009 DK 200970015; 29.05.2009 US 182178 P
(43) Date of publication of application: 04.04.2012
(73) Proprietor: Vestas Wind Systems A/S, 8200 Aarhus N (DK)
(72) Inventor: BUUS, Thomas, Paw, DK-8960 Randers SØ (DK); CHRISTIANSEN, Niels-Jacob, DK-8320 Mårslet (DK)
(74) Representative: Plougmann & Vingtoft A/S
(86) International application number: PCT/DK2010/050116
(87) International publication number: WO 2010/136045

(56) References cited:
- DE-A1- 19 809 638
- DE-A1-102004 019 424
- US-A- 4 616 948

## Description

### FIELD OF THE INVENTION

The present invention relates to a connection of two shafts, for example a driving shaft and a driven shaft in a wind turbine. In particular, the invention relates to a connection making use of a band to lock the two shafts together.

### BACKGROUND OF THE INVENTION

Wind turbines are used to gather wind energy and to transform the energy into another form of energy. For this purpose most wind turbines include a shaft which in one end is coupled to the blades of the wind turbine and in the opposite end connected to a driven wind turbine part. This driven wind turbine part may be an input shaft of a gearbox or an input shaft or torque transferring member of an electric energy generator.

In modern wind turbines, the torque which is to be transferred in a connection between a driving member and a driven member driven is relatively high. The torque may lie in the interval between 500 and 15000 kilo Newton meters.

Various solutions have been provided in wind turbines in order to connect the shaft and the driven part in a way which can sustain the high torque. One solution is to mount a so-called shrink disc around an interconnection area of the shaft and the driven part and apply the necessary pressure to transfer the loads in a friction connection. It is however difficult and time consuming to connect and lock the shafts to each other by means of shrink discs, moreover shrink discs are relative expensive.

DE102004019424 discloses a device for assembling a shrink disk (3) between the connection of two shafts comprises cylinder units (9) joined to the disk. Each cylinder unit consists of a cylinder (10) and a piston rod (11) protruding from the cylinder and provided with an outer thread corresponding to the inner thread (8) of the threaded bore (7) of the outer ring (4). An independent claim is also included for a method for assembling a shrink disk between the connection of two shafts. Disclosed features comprises that the piston rod is provided with a tool connection (21) on the end facing away from the outer thread. All cylinders are connected to an oil pump via a feed line.

US4616948 discloses that in the field of fastening components together in such a way as to be able to transmit mechanical power, keyways and keys have been used; also, interlocking conical tapers have been used which are actuated either by a ring of screws or by oil-injection. The coupling according to the US4616948 comprises an annular chamber housing an annular piston; the chamber and the piston have matching tapers. Oil is pumped into one end of the chamber to move the piston axially in one direction to cause radial expansion of the chamber to connect two components; oil is pumped into the other end of the chamber to move the piston in the opposite direction to disconnect said components. Uses of the coupling are, for example, to join the adjacent ends of coaxial shafts and to act as a locking bush to join concentrically arranged components.

### SUMMARY OF THE INVENTION

It may be seen as an object of the present invention to provide an improved connection for connecting a first shaft and a second shaft. It may moreover be seen as an object of the invention to provide a solution which is able to withstand relative high torques and possibly also bending moments provided between a first shaft and a second shaft, while still being relatively inexpensive and possibly also simple and effective to use. In particular, it may be seen as an object of the present invention to provide an improved connection which is suitable for connecting a driving member and a driven member in a wind turbine.

Preferably, the invention alleviates, mitigates or eliminates one or more of the above or other disadvantages singly or in any combination.

Accordingly there is provided, in a first aspect, a connection for connecting a first shaft and a second shaft, the connection comprising:
- a first shaft with a length in a longitudinal direction;
- a second shaft with a length in the longitudinal direction, the first shaft and the second shaft being inter-connectable by connecting an interconnection part of the first shaft and an interconnection part of the second shaft; and
- a band being positioned and adapted so as to lock the first shaft to the second shaft by transferring moment between the first and second shafts by friction by providing pressure to the interconnection parts of the first and second shaft when the interconnection parts are interconnected, and wherein the pressure is provided by winding the band around an outer circumferential surface enclosing the interconnection parts of the first shaft and second shaft.

An improved shaft connection is provided, the improvement or advantage may lie therein that the described connection is able to withstand the torque provided between a driving member, such as a hub or a shaft, and a driven member, such as an entrance member of a gearbox or a generator in the wind turbine, while still being relatively compact, inexpensive and also simple and effective to use.

As compared to a shrink disc solution of the prior art, the improvement or advantage may lie therein that the described connection is able to obtain same or similar pressures, as obtainable by a use of a shrink disc, by the windings of the band around the complete circumference of the shaft elements. Further advantages in relation to the shrink disc or similar solution lies in the reduced weight, in that there is only limited need for tightening bolts as compared to the relative high number of tension bolts used in a typical shrink disc. Moreover, sourcing of a band is easier at remote locations than sourcing of the more elaborate solution of the shrink disc.

The solution of the present invention may be referred to as a band winding shrink element.

A further improvement or advantage may lie therein that the described connection need no or only minor changes in shaft design of existing systems which use a shrink disc solution for establishing the connection.

In a particular simple design suitable for connection of the shaft ends, at least one of the first and second shafts are hollow, thereby enabling interconnection by inserting one of the shafts into the hollow part of the other shaft, such as a sleeve or collar. It is an advantage of embodiments of the present invention that there may be no requirements of utilizing elaborately formed interconnection parts. Even though elaborately formed interconnection parts may also be used in connection with embodiments of the present invention.

In an embodiment, the band is wound around an outer circumferential surface enclosing the interconnection parts of the shafts. This may be an advantage since it may be relatively easy to access and mount the band on the outside of shaft elements.

In advantageous embodiments, the connection comprises a plurality of band windings, such as more than 5 windings, more than 10 windings, more than 25 windings, more than 50 windings, more than 75 windings or even more than 100 windings.

The adjacent individual windings of the plurality of windings may at least partly overlap. In embodiments the individual windings may completely overlap, they may overlap in a helical winding, or by other means. It is an advantage to overlap at least part of the windings to ensure that outer-lying windings press on innerlying windings.

In embodiments, the material thickness of the band may be in the range of 0.1 to 5 mm. It may be advantageous to use as thin a band as possible which is still able to withstand the tension imposed on the band in order to provide pressure to the interconnecting parts. The thickness may be such as 0.25 mm, 0.5 mm, 1 mm, 2 mm, 3 mm, 4 mm, or other appropriate material thicknesses.

In embodiments, the width of the band may be in the range of 100 to 500 mm. The specific width may be selected in accordance with the specific size of the two shafts. The width may be such as 200 mm, 300 mm, 400 mm, or any appropriate width.

In embodiments, the band may further comprise a locking means for fixing the band to the outer circumferential surface enclosing the interconnection parts of the first shaft and second shaft. In an embodiment, the band is provided with sufficient tension to press the interconnection parts of the first and second shafts together, the tension may be provided by straining the band. In this situation, the band will seek towards an unstrained situation, which will have a self-locking effect on the band. Nevertheless, the band may advantageously be fixed by use of locking means to avoid any unintended movement or release of the band.

It may be an advantage to vary the tension that is provided to the individual windings of the plurality of windings. In embodiments the tension may be reduced in outer lying windings as compared to inner lying windings. In a particular embodiment, a first tension is provided to a first plurality of windings and a second reduced tension to at least a second plurality of winding, the first plurality of windings being positioned closer to the outer circumferential surface than the at least second plurality of windings. The tension of inner lying windings may be of a magnitude sufficiently large to ensure the locking of the interconnection parts, whereas the tension of outer lying winding may be reduced in magnitude, even down to zero tension. By providing the outer windings with only a little or even no tension, it may be relative simple to finalize the winding since there is no or only little need of applying a counter-force to the end of the band just before fixing the band end.

In embodiments, the material of the band is selected from the group of steel, carbon and composite materials. Any material which is sufficiently strong to provide the necessary pressure to the interconnection parts can be used. Steel is relatively easy to source, while carbon-based materials may be light, but typically more expensive than steel. Composite materials may be lighter and/or able to sustain higher tensions than steel. But again, they are typically more expensive than steel.

In embodiments, two or more bands may be positioned at and wound around the outer circumferential surface enclosing the interconnection parts of the first shaft and second shaft. By using two or more bands, detailed control of the pressure that is applied to the interconnection parts can be obtained.

In a second aspect, the present invention relates to a wind turbine comprising a connection according to the first aspect.

In a third aspect, the present invention relates to a tool adapted to carry a band and a holding means for holding the band with a counter force during winding of the band, the tool being adapted carry the band during winding the band onto a connection in accordance with the first or second aspect.

The holding tool may comprise a heating section for heating the band prior to winding the band around the interconnection parts. It is an advantage of the present invention that heat in not required. However for certain situations the application of heat may nevertheless be advantageous. By heating the band the counter force needed to impose tension on the band may be reduced.

In a fourth aspect, the present invention relates to a method for connecting a first shaft and a second shaft, the connection comprising:
- a first shaft with a length in a longitudinal direction;
- a second shaft with a length in the longitudinal direction, the first shaft and the second shaft being inter-connectable by connecting an interconnection part of the first shaft and an interconnection part of the second shaft; and
- a band;
wherein the method comprises:
- interconnecting the interconnection parts of the first shaft and the second shaft
- positioning the band around an outer circumferential surface enclosing the interconnection parts of the first shaft and second shaft;
- winding the band around the outer circumferential surface enclosing the interconnection parts of the first shaft and second shaft so as to lock the first shaft to the second shaft by transferring moment between the first and second shafts by friction by providing pressure from the band winding to the interconnection parts of the first and second shaft.

The method is provided to obtain a connection in accordance with the first or second aspect of the invention.

In general the various aspects and advantages of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 schematically illustrates a side-view of elements of a wind turbine;
FIGS. 2A to 2C are schematic drawings showing of the interconnecting area of the first and second shafts;
FIG. 3 illustrates a schematic cut-through of the first shaft inter-connected with the second shaft and the band wound around the circumferential surface;
FIGS. 4A and 4B illustrate a schematic side view of a part of the second shaft and specific configuration of the band windings;
FIG. 5 illustrates a schematic side view of a part of the second shaft and four bands positioned adjacently;
FIG. 6 illustrates an embodiment of a winding tool; and
FIG. 7 illustrates a flow diagram of an embodiment of a method of connecting the two shafts by use of the tool of FIG. 6.

### DESCRIPTION OF EMBODIMENTS

In this section, a connection for connecting a first shaft and a second shaft is disclosed in relation to connecting a main shaft to an input shaft of a gearbox in a wind turbine. It is however to be understood that, while such a connection is an important application of the connection, in the broadest aspect the connection is not limited to this specific type of connection.

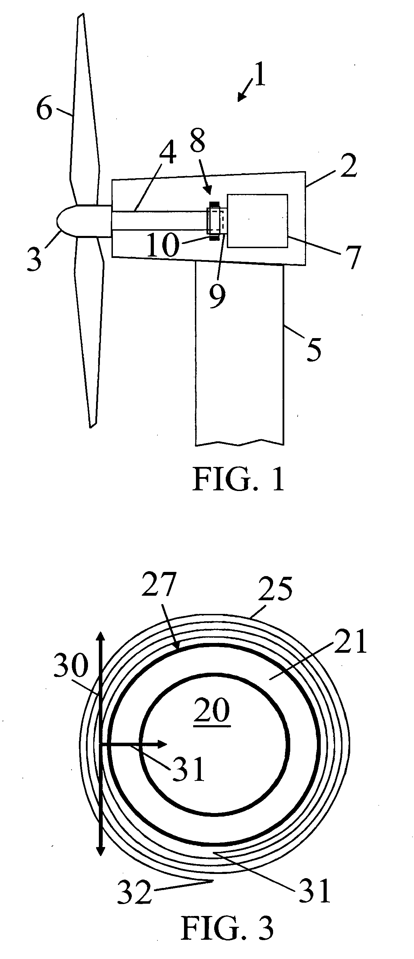

FIG. 1 schematically illustrates a side-view of elements of a wind turbine 1 with a nacelle 2, and a hub 3 rotatably mounted to the nacelle 2 via a main shaft 4. The hub and the main shaft are examples of driving members of the wind turbine. The nacelle 2 is mounted on a wind turbine tower 5 via a rotary joint. Typically the hub 3 of the wind turbine includes three wind turbine blades 6 attached to the hub (here only two are shown).

The figure shows a connection 8 for or in a wind turbine between the main shaft 4 and an input shaft 9 or input member of a gearbox 7. In embodiments, the input shaft may be an input shaft of a generator. The first and the second shafts are inter-connectable by connecting an interconnection part of the first shaft and an interconnection part of the second shaft. The band 10, surrounding the shafts, is positioned and adapted so as to lock and connect the first shaft to the second shaft by providing pressure to the interconnection parts of the first and second shaft.

The first shaft 4 may also be referred to as a driving member and the second shaft 9 may also be referred to as a driven member.

A purpose of the connection may be to provide a rigid connection to transfer a high torque between the two shafts 4, 9, or alternatively, or possibly additionally, a high bending moment between the two shafts. The torque is among others resulting from a force provided by the wind to the blades and via the first shaft 4. The torque also results from resistance provided by a system for generating energy coupled to the second shaft 9. The connection may also be provided for transferral of e.g. bending moments.

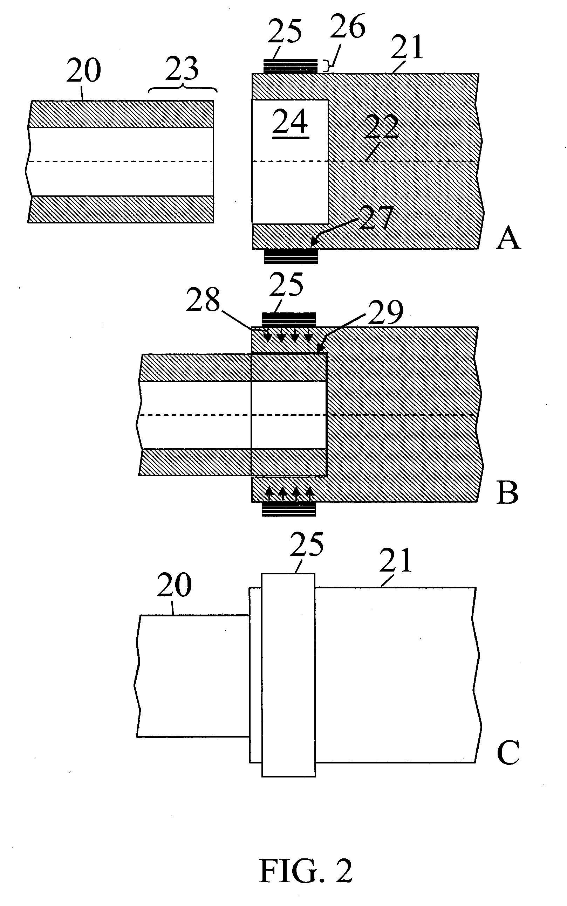

FIGS. 2A to 2C are schematic drawings of the interconnecting area of the first and second shafts.

FIG. 2A schematically illustrates, in cross-section, the first shaft 20 and the second shaft 21 prior to inter-connecting of the shafts. Both shafts are extended along a longitudinal direction, here indicated by the centre axis 22. The two shafts are inter-connectable by connecting an interconnection part of the first shaft, here an end section 23 of the shaft, and an interconnection part of the second shaft, here a hollow section 24 of the shaft. The first shaft is illustrated to be hollow; in general it may be hollow or solid.

FIGS. 2B and 2C schematically illustrate the first and second shafts as inter-connected. FIG. 2B schematically illustrates the connected shafts in cross-section, whereas FIG. 2C is a schematic side-view of the connected shafts.

A band 25 is positioned and adapted to lock the first shaft to the second shaft. The band comprises a plurality of winding 26 and is wound around an outer circumferential surface 27 enclosing the interconnection parts of the first shaft and second shaft. The outer circumferential surface is the outer surface of the second shaft.

The band 25 lock the first shaft to the second shaft by transferring moment between the first and second shafts by friction by providing pressure to the interconnection parts of the first and second shaft when the interconnection parts are interconnected. The pressure is provided by pressing with the band sufficiently hard at the outer surface of the second shaft, so that the pressure 28 propagates through the second shaft to provide sufficient friction in the contact face 29 between the second shaft and the first shaft. Possibly the pressure is so large that part or all of the material of the second part enveloped by the circumferential surface is plastically deformed. It is not a problem that the pressure is so large as to induce plastic deformation; however liquidity of the material under pressure should be avoided. For example to avoid segregation of material components which may lubricate the contact face 29 to effectively reduce the friction force.

The pressure from the band to the interconnection parts is provided by providing a tension to the band. The may be done by straining the band prior to, or during, the winding, so that at least part of the plurality of band windings are mounted in a strained configuration. Since the band seeks an equilibrium state it exerts an inwards force pressing the interconnection parts together.

The main shaft in a wind turbine may in some wind turbine models be more than 1 meter in diameter. However, a range of main shaft diameters is used in different turbine models. Thus, the number of windings, the thickness of the band as well as the width of the band may be selected in dependence upon the details of the shaft components. It is within the capabilities of the skilled person to select an appropriate specific band configuration.

FIG. 3 illustrates a schematic cut-through of the first shaft 20 inter-connected with the second shaft 21 and the band 25 wound around the circumferential surface 27. The band comprises a plurality of windings, here illustrated with only four windings, however much more windings may be present.

In an embodiment, at least an inner plurality of band windings is strained with a given tension, as indicated with the arrows 30, which give rise to an inward force 31.

A strained band will due to the tension in the band be more or less self-locked. Thus once the first couple of windings are in place, only weak or even no specific locking means may be necessary in order to hold the inner windings in place during the winding or after the winding process.

In an embodiment, the inner end 31 of the band may be loosely positioned, and a first couple of windings may be wound, after which the following windings may be strained to provide the necessary tension to lock the two shafts to each other. Alternatively, the inner end 31 may be attached to the circumferential surface, e.g. by means of rivets, bolts, glue, a tool, or other suitable attachment means. As a further alternative, the inner end section 31 may be bent to form a hook or other gripping means in combination with a groove formed in the circumferential surface, to which the hook can attach. Again, once a few windings are wound, there is normally not need for additional attachment means. Nevertheless, if needed, the inner end may solidly be attached to the circumferential surface prior to the winding process.

Once an inner first plurality of windings has been wound with a given tension, these windings will normally stay fixed. For example, once 15 to 25 winding have been strained with a given tension. An outer second plurality may be wound with a second reduced tension, or even no tension. Since the inner windings are under tension, the band will normally stay in place. However, the outer end 32 of the band, may nevertheless be fixed. For example by use of rivets, bolts, glue, or other suitable fixing means. In an alternatively embodiment, outer lying windings may be wound with gradually reduced tension. It is also possible to vary the tension between individual winding if this is beneficial for a given purpose.

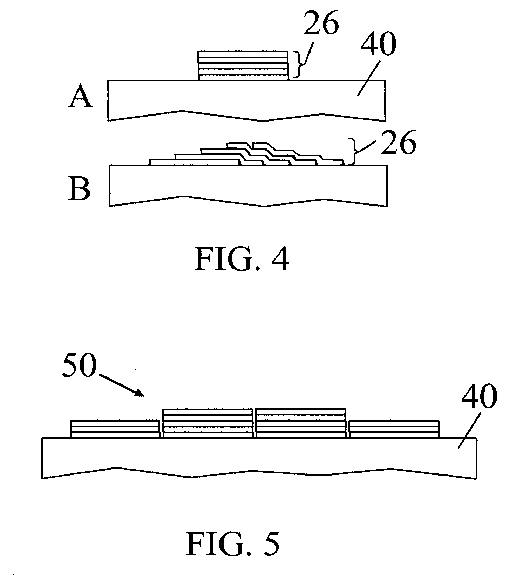

FIGS. 4A and 4B illustrate a schematic side view of a part of the second shaft 40 and the windings 26. FIG. 4A shows adjacent individual windings which overlaps, however the band may also be wound so that adjacent individual windings only partly overlap, an example of which is shown in FIG. 4B. The winding configuration is however not limited to the two examples shown in FIGS. 4A and 4B.

FIG. 5 illustrates a schematic side view of a part of the second shaft 40 and four bands 50 positioned adjacently. In general a number of bands may be applied in the connection. In FIG. 5, the individual bands are positioned adjacently, however individual bands may also be positioned to overlap with each other. In the figure the number of windings in the different bands are different, in general the specific number of windings in the individual bands may be selected to be the same or different as is most appropriate for a given situation.

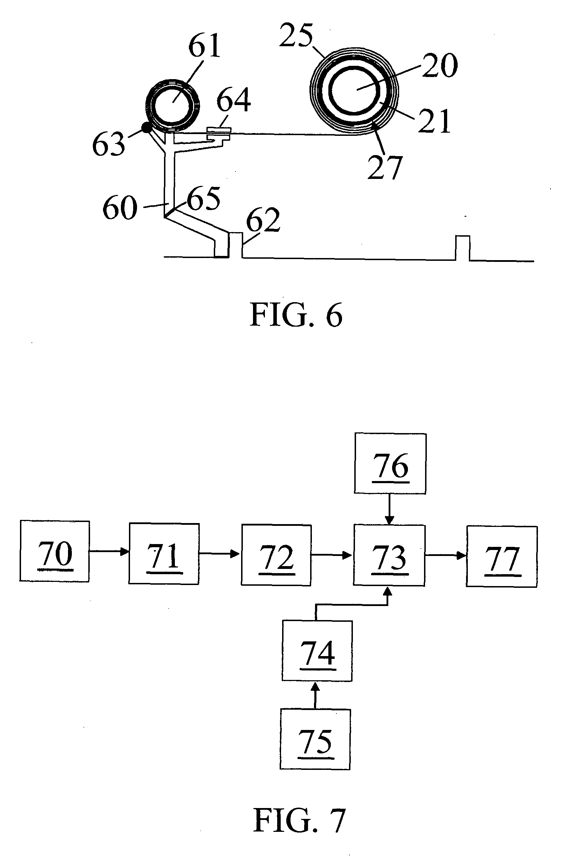

FIG. 6 illustrates an embodiment of a tool for use in connection with connecting a first shaft 20 to a second shaft 21 by means of a band wound around a circumferential surface 27 enclosing the interconnection parts of the two shafts.

The tool 60 comprises an arm 61 for carrying the band 25 and a brake 63 or other means for optionally holding the band with a counter force during the winding of the banding. The tool may also comprise a heating section 64 for heating the band prior to winding the band around the interconnection parts. The tool may be attached to a frame 62, such as a frame of the nacelle. In an embodiment, the tool is a service tool which is mounted in the nacelle when it is needed, typically by use of a service crane. The tool may also be adapted for winding two or more bands simultaneously or subsequently.

FIG. 7 illustrates a flow diagram of an embodiment of a method of connecting the two shafts by use of the tool of FIG. 6.

As a first step 70, the tool is mounted in the nacelle, next the two shafts are interconnected 71 and third the first band end is positioned 72 around the outer circumferential surface enclosing the interconnection parts. The order of these steps can be selected in the most appropriate way, likewise the first couple of windings may be made prior to interconnecting the two shafts if desired. With the interconnection parts in place, the band is wound 73 to lock the shafts.

The pressure provided by the band, may be provided by providing a tension 64 to the band so as to obtain strained windings. This may in an embodiment be achieved by operating the tools so as to hold 75 the band with a counter force during the winding thereby inducing a strain in the band. The winding may in an embodiment be achieved by driving 76 the gearbox with a certain speed while holding the band with a certain retaining force, e.g. by use of a brake 63. By proper operation of the winding and the braking band can be strain in a controlled way. In general, the rotation of the interconnection parts during the winding of the band may be done by driving the second shaft by a suitable driver unit. The driver unit may be an electric motor, such as a turner gear, connected to the gearbox.

In an embodiment, the plurality of windings may be wound with different or varying tensions in different windings. After the winding process, the band end may be fixed 77 by a suitable locking means.

The winding may be performed so that the windings at least partly overlap. In an embodiment where the band windings more or less completely overlap, there is no need of displacing the band during the winding. If however a configuration where only part of the individual band windings are to overlap, the tool (cf. FIG. 6) may be provided with a displacement arm 65 for displacing the tool along the axis of the shafts. Alternatively, the tool may be attached to the frame by means of a rail enabling displacement of the tool along the axis of the shafts.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A connection (8) for connecting a first shaft (4, 20) and a second shaft (9, 21), the connection comprising:
- a first shaft (4, 20) with a length in a longitudinal direction;
- a second shaft (9, 21) with a length in the longitudinal direction, the first shaft and the second shaft being inter-connectable by connecting an interconnection part of the first shaft and an interconnection part of the second shaft; and
- a band (10, 25) being positioned and adapted so as to lock the first shaft to the second shaft for transferring moment between the first (4, 20) and second (9, 21) shafts, the band being positioned and adapted so as to lock the first shaft to the second shaft by friction by providing pressure to the interconnection parts of the first and second shaft when the interconnection parts are interconnected, **characterised in that** the pressure is provided by winding the band around an outer circumferential surface enclosing the interconnection parts of the first shaft and second shaft, and **in that** the connection comprises a plurality of band windings and **in that** the pressure from the band to the interconnection parts is provided by tension in the band.

2. The connection (8) according to claim 1, wherein at least one of the first (4, 20) and second (9, 21) shafts are hollow.

3. The connection (8) according to claim 2, wherein the band (10, 25) is wound around an outer circumferential surface (27) enclosing the interconnection parts of the hollow shaft.

4. The connection (8) according to claim 1, wherein adjacent individual windings of the plurality of windings (26) at least partly overlap.

5. The connection (8) according to any of the preceding claims, wherein the band further comprises a locking means for fixing the band to the outer circumferential surface (27) enclosing the interconnection parts of the first shaft and second shaft.

6. The connection (8) according to any of the claim 1, 4 or 5, wherein a varying tension (30) is provided to the individual windings of the plurality of windings (26).

7. The connection (8) according to any of the preceding claims, wherein a first tension is provided to a first plurality of windings and at least a second reduced tension is provided to at least a second plurality of winding, the first plurality of windings being positioned closer to the outer circumferential surface than the at least second plurality of windings.

8. The connection (8) according to any of the preceding claims, wherein two or more bands are wound around the outer circumferential surface (27) enclosing the interconnection parts of the first shaft (4, 20) and second shaft (9, 21).

9. The connection (8) according to any of the preceding claims for connection of a driving shaft (4) to a gearbox (9, 7).

10. A wind turbine (1) comprising a connection (8) according to any of the preceding claims.

11. A tool (60) adapted to carry a band and a holding means for holding the band with a counter force during winding of the band, the tool being adapted to carry the band during winding of the band onto a connection in accordance with any of the claims 1 to 10.

12. The tool (60) according to claim 11 further comprising a heating section (64) for heating the band (25) prior to winding the band around the interconnection parts.

13. A method for connecting a first shaft and a second shaft, the connection comprising:
- a first shaft (4, 20) with a length in a longitudinal direction;
- a second shaft (9, 21) with a length in the longitudinal direction, the first shaft and the second shaft being inter-connectable by connecting an interconnection part of the first shaft and an interconnection part of the second shaft; and
- a band (10, 25);
wherein the method comprises:
- interconnecting (71) the interconnection parts of the first shaft (4, 20) and the second shaft (9, 21)
- positioning (72) the band around an outer circumferential surface (27) enclosing the interconnection parts of the first shaft and second shaft; **characterized in that** the method further comprises
- winding (73) the band around the outer circumferential surface enclosing the interconnection parts of the first shaft and second shaft so as to lock the first shaft to the second shaft for transferring moment between the first and second shafts and so as to lock the first shaft to the second shaft by friction by providing pressure from the band winding to the interconnection parts of the first and second shaft, wherein the winding of the band is so that the band comprises a plurality of windings (26) and wherein the band is wound with a tension (30) and wound (73) so that adjacent individual windings of the plurality of windings at least partly overlap.

14. The method according to claim 13, further comprising fixing the band (10, 25) to the outer circumferential surface enclosing the interconnection parts of the first shaft and second shaft by applying a locking means to the band.

15. The connection according to any of the claim 13 or 14, wherein a varying tension is provided to the individual windings of the plurality of windings (26).

16. The method according to any of the claims 13-15, wherein the band (10, 25) is heated during the winding around the interconnection parts.

17. The method according to any of the claims 13-16, wherein the band is carried by a tool, and wherein the tool comprises a holding means for holding the band with a counter force during the winding of the band so as to provide tension (30) to the band windings.

18. The method according to any of the claims 13-17 for connecting a driving shaft (4) to a gearbox (9, 7), wherein the rotation of the interconnection parts during the winding of the band is done by driving the gearbox.

19. The method according to any of the claims 13-18 for connecting a driving shaft (4) to a driven member (9), wherein the rotation of the interconnection parts during the winding of the band (10, 25) is done by driving the second shaft (9) by a driver unit.

## Patentansprüche

1. Verbindung (8) zum Verbinden einer ersten Welle (4, 20) und einer zweiten Welle (9, 21), wobei die Verbindung Folgendes umfasst:
- eine erste Welle (4, 20) mit einer Länge in einer Längsrichtung;
- eine zweite Welle (9, 21) mit einer Länge in der Längsrichtung, wobei die erste Welle und die zweite Welle durch Verbinden eines Verbindungsstücks der ersten Welle und eines Verbindungsstücks der zweiten Welle miteinander verbindbar sind; und
- ein Band (10, 25), das derart positioniert und ausgelegt ist, die erste Welle an der zweiten Welle zum Übertragen von Moment zwischen der ersten (4, 20) und zweiten (9, 21) Welle zu arretieren, wobei das Band derart positioniert und ausgelegt ist, die erste Welle an der zweiten Welle mittels Friktion durch Bereitstellen von Druck auf die Verbindungsstücke der ersten und zweiten Welle, wenn die Verbindungsstücke verbunden sind, zu arretieren, **dadurch gekennzeichnet, dass** der Druck durch Wickeln des Bands um eine äußere Umfangsfläche herum, die die Verbindungsstücke der ersten Welle und zweiten Welle umschließt, bereitgestellt wird und dadurch, dass die Verbindung mehrere Bandwicklungen umfasst und dadurch, dass der Druck des Bands auf die Verbindungsstücke durch Spannungen in dem Band bereitgestellt wird.

2. Verbindung (8) nach Anspruch 1, wobei mindestens eine von der ersten (4, 20) und zweiten (9, 21) Welle hohl ist.

3. Verbindung (8) nach Anspruch 2, wobei das Band (10, 25) um eine äußere Umfangsfläche (27), die die Verbindungsstücke der hohlen Welle umschließt, herumgewickelt ist.

4. Verbindung (8) nach Anspruch 1, wobei angrenzende individuelle Wicklungen der mehreren Wicklungen (26) mindestens teilweise überlappen.

5. Verbindung (8) nach einem der vorhergehenden Ansprüche, wobei das Band ferner Arretiermittel zum Arretieren des Bands an der äußeren Umfangsfläche (27), die die Verbindungsstücke der ersten Welle und zweiten Welle umschließt, umfasst.

6. Verbindung (8) nach einem der Ansprüche 1, 4 oder 5, wobei eine variierende Spannung (30) auf den individuellen Wicklungen der mehreren Wicklungen (26) bereitgestellt ist.

7. Verbindung (8) nach einem der vorhergehenden Ansprüche, wobei eine erste Spannung auf mehreren ersten Wicklungen bereitgestellt ist und mindestens eine zweite reduzierte Spannung auf mindestens mehreren zweiten Wicklungen bereitgestellt ist, wobei die mehreren ersten Wicklungen näher an der äußeren Umfangsfläche positioniert sind als die mindestens mehreren zweiten Wicklungen.

8. Verbindung (8) nach einem der vorhergehenden Ansprüche, wobei ein oder mehrere Bänder um die äußere Umfangsfläche (27), die die Verbindungsstücke der ersten Welle (4, 20) und zweiten Welle (9, 21) umschließt, herumgewickelt sind.

9. Verbindung (8) nach einem der vorhergehenden Ansprüche zum Verbinden einer Antriebswelle (4) mit einem Getriebe (9, 7).

10. Windturbine (1), die eine Verbindung (8) nach einem der vorhergehenden Ansprüche umfasst.

11. Werkzeug (60), das dafür ausgelegt ist, ein Band und Haltemittel zum Halten des Bands mit einer entgegenwirkenden Kraft während des Herumwickelns des Bands zu tragen, wobei das Werkzeug dafür ausgelegt ist, das Band während des Herumwickelns des Bands um eine Verbindung nach einem der Ansprüche 1 bis 10 zu tragen.

12. Werkzeug (60) nach Anspruch 11, das ferner einen Erwärmungsabschnitt (64) zum Erwärmen des Bands (25) vor dem Wickeln des Bands um die Verbindungsstücke herum umfasst.

13. Verfahren zum Verbinden einer ersten Welle und einer zweiten Welle, wobei die Verbindung Folgendes umfasst:
- eine erste Welle (4, 20) mit einer Länge in einer Längsrichtung;
- eine zweite Welle (9, 21) mit einer Länge in der Längsrichtung, wobei die erste Welle und die zweite Welle durch Verbinden eines Verbindungsstücks der ersten Welle und eines Verbindungsstücks der zweiten Welle miteinander verbindbar sind; und
- ein Band (10, 25);
wobei das Verfahren Folgendes umfasst:
- Verbinden (71) der Verbindungsstücke der ersten Welle (4, 20) und der zweiten Welle (9, 21) miteinander
- Positionieren (72) des Bands um eine äußere Umfangsfläche (27) herum, die die Verbindungsstücke der ersten Welle und zweiten Welle umschließt; **dadurch gekennzeichnet, dass** das Verfahren ferner Folgendes umfasst:
- Wickeln (73) des Bands derart um die äußere Umfangsfläche, die die Verbindungsstücke der ersten Welle und zweiten Welle umschließt, herum, dass die erste Welle an der zweiten Welle zum Übertragen von Moment zwischen der ersten und zweiten Welle arretiert ist, und derart, dass die erste Welle an der zweiten Welle mittels Friktion durch Bereitstellen von Druck von der Bandwicklung auf die Verbindungsstücke der ersten und zweiten Welle arretiert ist, wobei das Wickeln des Bands derart erfolgt, dass das Band mehrere Wicklungen (26) umfasst, und wobei das Band mit einer Spannung (30) gewickelt ist und derart gewickelt (73) ist, dass angrenzende individuelle Wicklungen der mehreren Wicklungen mindestens teilweise überlappen.

14. Verfahren nach Anspruch 13, das ferner das Befestigen des Bands (10, 25) an der äußeren Umfangsfläche, die die Verbindungsstücke der ersten Welle und zweiten Welle umschließt, durch Anwenden von Arretiermitteln auf das Band umfasst.

15. Verbindung nach einem der Ansprüche 13 oder 14, wobei eine variierende Spannung auf den individuellen Windungen der mehreren Windungen (26) bereitgestellt ist.

16. Verfahren nach einem der Ansprüche 13 bis 15, wobei das Band (10, 25) während des Wickelns um die Verbindungsteile herum erwärmt ist.

17. Verfahren nach einem der Ansprüche 13 bis 16, wobei das Band durch ein Werkzeug getragen wird und wobei das Werkzeug Haltemittel zum Halten des Bands mit einer Gegenkraft während des Wickelns des Bands umfasst, um Spannung (30) auf den Bandwicklungen bereitzustellen.

18. Verfahren nach einem der Ansprüche 13 bis 17 zum Verbinden einer Antriebswelle (4) mit einem Getriebe (9, 7), wobei die Rotation der Verbindungsstücke während des Wickelns des Bands durch Betreiben des Getriebes erfolgt.

19. Verfahren nach einem der Ansprüche 13 bis 18 zum Verbinden einer Antriebswelle (4) mit einem Abtriebsglied (9), wobei die Rotation der Verbindungsstücke während des Wickelns des Bands (10, 25) durch Betreiben der zweiten Welle (9) mittels eines Antriebssystems erfolgt.

## Revendications

1. Connexion (8) pour connecter un premier arbre (4, 20) et un deuxième arbre (9, 21), la connexion comprenant :
- un premier arbre (4, 20) avec une longueur dans une direction longitudinale ;
- un deuxième arbre (9, 21) avec une longueur dans la direction longitudinale, le premier arbre et le deuxième arbre étant interconnectables en connectant une partie d'interconnexion du premier arbre et une partie d'interconnexion du deuxième arbre ; et
- une bande (10, 25) étant positionnée et adaptée de manière à bloquer le premier arbre avec le deuxième arbre pour transférer un moment entre les premier (4, 20) et deuxième (9, 21) arbres, la bande étant adaptée et positionnée de manière à bloquer le premier arbre avec le deuxième arbre par friction en fournissant une pression aux parties d'interconnexion des premier et deuxième arbre quand les parties d'interconnexion sont interconnectées, **caractérisée en ce que** la pression est fournie en enroulant la bande autour d'une surface périphérique extérieure entourant les parties d'interconnexion du premier arbre et du deuxième arbre, et **en ce que** la connexion comprend une pluralité d'enroulements de bande et **en ce que** la pression de la bande aux parties d'interconnexion est fournie par une tension dans la bande.

2. Connexion (8) selon la revendication 1, dans laquelle au moins un des premier (4, 20) et deuxième (9, 21) arbres est creux.

3. Connexion (8) selon la revendication 2, dans laquelle la bande (10, 25) est enroulée autour d'une surface périphérique extérieure (27) entourant les parties d'interconnexion de l'arbre creux.

4. Connexion (8) selon la revendication 1, dans laquelle des enroulements individuels adjacents de la pluralité d'enroulements (26) se chevauchent au moins partiellement.

5. Connexion (8) selon l'une quelconque des revendications précédentes, dans laquelle la bande comprend en outre un moyen de blocage pour fixer la bande à la surface périphérique extérieure (27) entourant les parties d'interconnexion du premier arbre et du deuxième arbre.

6. Connexion (8) selon l'une quelconque des revendications 1, 4 ou 5, dans laquelle une tension variable (30) est fournie aux enroulements individuels de la pluralité d'enroulements (26).

7. Connexion (8) selon l'une quelconque des revendications précédentes, dans laquelle une première tension est fournie à une première pluralité d'enroulements et au moins une deuxième tension réduite est fournie à au moins une deuxième pluralité d'enroulements, la première pluralité d'enroulements étant positionnée plus proche de la surface périphérique extérieure que l'au moins une deuxième pluralité d'enroulements.

8. Connexion (8) selon l'une quelconque des revendications précédentes, dans laquelle au moins deux bandes sont enroulées autour de la surface périphérique extérieure (27) entourant les parties d'interconnexion du premier arbre (4, 20) et du deuxième arbre (9, 21).

9. Connexion (8) selon l'une quelconque des revendications précédentes pour la connexion d'un arbre d'entraînement (4) à une boîte de transmission (9, 7).

10. Eolienne (1) comprenant une connexion (8) selon l'une quelconque des revendications précédentes.

11. Outil (60) adapté pour porter une bande et un moyen de retenue pour retenir la bande avec une contre-force durant l'enroulement de la bande, l'outil étant adapté pour porter la bande durant l'enroulement de la bande sur une connexion selon l'une quelconque des revendications 1 à 10.

12. Outil (60) selon la revendication 11, comprenant en outre une section chauffante (64) pour chauffer la bande (25) avant l'enroulement de la bande autour des parties d'interconnexion.

13. Procédé pour connecter un premier arbre et un deuxième arbre, la connexion comprenant :
- un premier arbre (4, 20) avec une longueur dans une direction longitudinale ;
- un deuxième arbre (9, 21) avec une longueur dans la direction longitudinale, le premier arbre et le deuxième arbre étant interconnectables en connectant une partie d'interconnexion du premier arbre et une partie d'interconnexion du deuxième arbre ; et
- une bande (10, 25) ;
dans lequel le procédé comprend :
- l'interconnexion (71) des parties d'interconnexion du premier arbre (4, 20) et du deuxième arbre (9, 21)
- le positionnement (72) de la bande autour de la surface périphérique extérieure (27) entourant les parties d'interconnexion du premier arbre et du deuxième arbre ; **caractérisé en ce que** le procédé comprend en outre
- l'enroulement (73) de la bande autour de la surface périphérique extérieure entourant les parties d'interconnexion du premier arbre et du deuxième arbre de manière à bloquer le premier arbre avec le deuxième arbre pour transférer un moment entre les premier et deuxième arbres et de manière à bloquer le premier arbre avec le deuxième arbre par friction en fournissant une pression de l'enroulement de bande aux parties d'interconnexion des premier et deuxième arbres, dans lequel l'enroulement de la bande est tel que la bande comprenne une pluralité d'enroulements (26) et dans lequel la bande est enroulée avec une tension (30) et enroulée (73) de manière que des enroulements individuels adjacents de la pluralité d'enroulements se chevauchent au moins partiellement.

14. Procédé selon la revendication 13, comprenant en outre la fixation de la bande (10, 25) à la surface périphérique extérieure entourant les parties d'interconnexion du premier arbre et du deuxième arbre en appliquant un moyen de blocage à la bande.

15. Procédé selon l'une quelconque des revendications 13 ou 14, dans lequel une tension variable est fournie aux enroulements individuels de la pluralité d'enroulements (26).

16. Procédé selon l'une quelconque des revendications 13 à 15, dans lequel la bande (10, 25) est chauffée durant l'enroulement autour des parties d'interconnexion.

17. Procédé selon l'une quelconque des revendications 13 à 16, dans lequel la bande est portée par un outil et dans lequel l'outil comprend un moyen de retenue pour retenir la bande avec une contre-force durant l'enroulement de la bande de manière à fournir une tension (30) aux enroulements de bande.

18. Procédé selon l'une quelconque des revendications 13 à 17 pour connecter un arbre d'entraînement (4) à une boîte de transmission (9, 7), dans lequel la rotation des parties d'interconnexion durant l'enroulement de la bande est effectuée en entraînant la boîte de transmission.

19. Procédé selon l'une quelconque des revendications 13 à 18 pour connecter un arbre d'entraînement (4) à un élément entraîné (9), dans lequel la rotation des parties d'interconnexion durant l'enroulement de la bande (10, 25) est effectuée en entraînant le deuxième arbre (9) par une unité d'entraînement.
